# DEMANDE DE BREVET EUROPEEN

(11) **EP 4 156 038 A1**
(43) Date de publication de la demande: **29.03.2023**
(21) Numéro de dépôt: 22198155.8
(22) Date de dépôt: 27.09.2022
(51) Int. Cl.: G06N 3/08, G06N 3/063, G06N 3/04, G06N 3/084

(54) **PROCÉDÉ D'OPTIMISATION DU FONCTIONNEMENT D'UN CALCULATEUR IMPLÉMENTANT UN RÉSEAU DE NEURONES**

(30) Priorité: 27.09.2021 FR 2110153
(71) Demandeur: Commissariat à l'Energie Atomique et aux Energies Alternatives, 75015 Paris (FR)
(72) Inventeur: LORRAIN, Vincent, 91191 Gif sur Yvette (FR); THIELE, Johannes Christian, 91191 Gif sur Yvette (FR)
(74) Mandataire: Lavoix

(57) **Abrégé**

La présente invention concerne un procédé d'optimisation du fonctionnement d'un calculateur implémentant un réseau de neurones, le procédé comprenant :
a. la fourniture d'un réseau de neurones,
b. la fourniture de données d'entraînement relatives aux valeurs prises par les paramètres du réseau de neurones lors d'un entraînement du réseau de neurones sur une base de données test,
c. la détermination, en fonction des données d'entraînement, d'une implémentation du réseau de neurones sur des blocs matériels d'un calculateur de sorte à optimiser un coût relatif au fonctionnement dudit calculateur implémentant le réseau de neurones, l'implémentation étant déterminée par décomposition des valeurs des paramètres du réseau de neurones en sous-valeurs et par l'attribution, à chaque sous-valeur, d'un bloc matériel parmi un ensemble de blocs matériels du calculateur, et
d. le fonctionnement du calculateur avec l'implémentation déterminée.

## Description

La présente invention concerne un procédé d'optimisation du fonctionnement d'un calculateur implémentant un réseau de neurones. La présente invention porte aussi sur un produit programme d'ordinateur associé. La présente invention porte également sur un support lisible d'informations associé.

Les systèmes d'apprentissage automatique sont utilisés dans un grand nombre d'applications. De tels systèmes sont notamment basés sur des réseaux de neurones préalablement entraînés sur une base de données d'entraînement. La tâche pour laquelle le réseau de neurones a été entraîné est ensuite effectuée lors d'une étape d'inférence.

Or, de tels systèmes sont très consommateurs de ressources du fait du grand nombre d'opérations arithmétiques, appelées multiply accumulate (de l'anglais traduit en français par « multiplie puis accumule » et abrégé en MAC), à effectuer pour traiter une donnée. Une telle consommation énergétique est notamment proportionnelle au nombre de bits avec laquelle la donnée est traitée. Un grand nombre de bits permet typiquement une meilleure performance applicative, mais requiert aussi des opérateurs calculatoires et accès mémoires plus consommateurs.

Il existe donc un besoin pour un procédé permettant d'optimiser la performance de systèmes d'apprentissage automatique mettant en œuvre un réseau de neurones.

A cet effet, l'invention a pour objet un procédé d'optimisation du fonctionnement d'un calculateur implémentant un réseau de neurones, le procédé étant mis en œuvre par ordinateur et comprenant les étapes suivantes :
a. la fourniture d'un réseau de neurones, le réseau de neurones présentant des paramètres dont les valeurs sont modifiables lors d'un entraînement du réseau de neurones,
b. la fourniture de données d'entraînement relatives aux valeurs prises par les paramètres du réseau de neurones lors d'un entraînement du réseau de neurones sur au moins une base de données test,
c. la détermination, en fonction des données d'entraînement, d'une implémentation du réseau de neurones sur des blocs matériels d'un calculateur de sorte à optimiser un coût relatif au fonctionnement dudit calculateur implémentant le réseau de neurones, l'implémentation étant déterminée par décomposition des valeurs des paramètres du réseau de neurones en sous-valeurs et par l'attribution, à chaque sous-valeur, d'au moins un bloc matériel parmi un ensemble de blocs matériels du calculateur, et
d. le fonctionnement du calculateur avec l'implémentation déterminée pour le réseau de neurones.

Suivant des modes de réalisation particuliers, le procédé comprend une ou plusieurs des caractéristiques suivantes, prise(s) isolément ou suivant toutes les combinaisons techniquement possibles :
- les valeurs de chaque paramètre sont chacune propres à être représentées par une suite de bits, chaque bit d'une suite ayant un poids différent en fonction de la position du bit dans la suite, le bit ayant le plus grand poids étant dit bit de poids fort, les sous-valeurs résultant d'une même décomposition étant chacune représentée par une suite d'un ou plusieurs bits ;
- chaque valeur d'un paramètre résulte d'une opération mathématique, telle qu'une addition, une concaténation ou une multiplication, sur les sous-valeurs de la décomposition correspondante ;
- lors de l'étape de fonctionnement, les sous-valeurs de chaque décomposition sont chacune multipliées à une valeur d'entrée et les résultats des multiplications résultantes sont sommées ou accumulées pour obtenir une valeur finale, la ou les sorties du réseau de neurones étant obtenues en fonction des valeurs finales ;
- lors de l'étape de fonctionnement, une opération mathématique est appliquée sur les sous-valeurs de chaque décomposition de sorte à obtenir une valeur intermédiaire, la valeur intermédiaire étant la valeur du paramètre correspondant à la décomposition, la valeur intermédiaire étant ensuite multipliée à une valeur d'entrée pour obtenir une valeur finale, la ou les sorties du réseau de neurones étant obtenues en fonction des valeurs finales ;
- l'opération mathématique est une addition, une concaténation ou une multiplication des sous-valeurs de chaque décomposition pour obtenir la valeur du paramètre correspondant ;
- le coût à optimiser utilise au moins une métrique de performance du calculateur implémentant le réseau de neurones lors d'un entraînement ultérieur du réseau de neurones sur une autre base de données, les valeurs initiales des paramètres du réseau de neurones lors de l'entraînement ultérieur étant définies en fonction des données d'entraînement ;
- le coût à optimiser utilise au moins une métrique de performance du calculateur implémentant le réseau de neurones lors d'une inférence ultérieure du réseau de neurones après un entraînement ultérieur du réseau de neurones sur une autre base de données, les valeurs initiales des paramètres du réseau de neurones lors de l'entraînement ultérieur étant définies en fonction des données d'entraînement ;
- les données d'entraînement comprennent les différentes valeurs prises par les paramètres au cours de l'entraînement sur la au moins une base de données test, la décomposition des valeurs des paramètres en sous-valeurs étant déterminée en fonction de la fréquence de changement et/ou de l'amplitude de changement desdites valeurs dans les données d'entraînement ;
- le coût à optimiser utilise au moins une métrique de performance du calculateur implémentant le réseau de neurones lors d'une inférence du réseau de neurones en considérant seulement une partie des sous-valeurs de chaque décomposition, les valeurs des paramètres du réseau de neurones ayant été fixés en fonction des données d'entraînement ;
- le coût à optimiser utilise au moins une métrique de performance du calculateur, la au moins une métrique de performance étant choisie parmi : la latence du calculateur sur lequel est implémenté le réseau de neurones, la consommation énergétique du calculateur sur lequel est implémenté le réseau de neurones, le nombre d'inférences par seconde lors de l'inférence du réseau de neurones implémenté sur le calculateur, la quantité de mémoire utilisée par tout ou partie des sous-valeurs de la décomposition, et la surface après fabrication du circuit intégré embarquant le calculateur;
- l'attribution de chaque bloc matériel à une sous-valeur est réalisée en fonction de la position du bloc matériel dans le calculateur et/ou du type du bloc matériel parmi les blocs matériels réalisant une fonction de mémorisation et/ou du type du bloc matériel parmi les blocs matériels réalisant une fonction de calcul.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et entraînant la mise en oeuvre d'un procédé tel que décrit précédemment lorsque le programme d'ordinateur est mis en œuvre sur l'unité de traitement des données.

La présente description concerne aussi un support lisible d'informations sur lequel est mémorisé un produit programme d'ordinateur tel que précédemment décrit.

D'autres caractéristiques et avantages de l'invention apparaîtront à la lecture de la description qui suit de modes de réalisation de l'invention, donnés à titre d'exemple uniquement et en référence aux dessins qui sont :
[Fig 1], Figure 1, une vue schématique d'un exemple de calculateur permettant la mise en œuvre d'un procédé d'optimisation du fonctionnement d'un calculateur implémentant un réseau de neurones,
[Fig 2], Figure 2, un organigramme d'un exemple de mise en œuvre d'un procédé d'optimisation du fonctionnement d'un calculateur implémentant un réseau de neurones,
[Fig 3], Figure 3, une représentation schématique d'un exemple de décomposition par addition d'une valeur d'un paramètre du réseau de neurones en sous-valeurs,
[Fig 4], Figure 4, une représentation schématique d'un exemple de décomposition par concaténation d'une valeur d'un paramètre du réseau de neurones en sous-valeurs,
[Fig 5], Figure 5, une représentation schématique d'un exemple de calcul, dit préopérateur, au cours duquel les sous-valeurs d'une décomposition par addition sont chacune multipliées à une valeur d'entrée et les résultats des multiplications résultantes sont sommées pour obtenir une valeur finale,
[Fig 6], Figure 6, une représentation schématique d'un exemple de calcul, dit préopérateur, au cours duquel les sous-valeurs d'une décomposition par concaténation sont chacune multipliées à une valeur d'entrée et les résultats des multiplications résultantes sont concaténées (accumulées) pour obtenir une valeur finale,
[Fig 7], Figure 7, une représentation schématique d'un exemple de calcul, dit postopérateur, au cours duquel les sous-valeurs d'une décomposition par addition sont sommées et la somme résultante est multipliée à une valeur d'entrée pour obtenir une valeur finale,
[Fig 8], Figure 8, une représentation schématique d'un exemple de calcul, dit postopérateur, au cours duquel les sous-valeurs d'une décomposition par concaténation sont concaténées et la concaténation résultante est multipliée à une valeur d'entrée pour obtenir une valeur finale,
[Fig 9], Figure 9, une représentation schématique d'un exemple de calcul, dit postopérateur, au cours duquel les sous-valeurs d'une décomposition sont les entrées d'une fonction propre à fournir une valeur intermédiaire, la valeur intermédiaire étant la valeur du paramètre correspondant à la décomposition, la valeur intermédiaire étant ensuite multipliée à une valeur d'entrée pour obtenir une valeur finale,
[Fig 10], Figure 10, une représentation schématique d'un exemple de mise à jour des sous-valeurs d'une décomposition par addition (ou plus généralement d'une décomposition résultant d'une opération mathématique) suite à un entraînement du réseau de neurones, et
[Fig 11], Figure 11, une représentation schématique d'un exemple de mise à jour des sous-valeurs d'une décomposition par concaténation suite à un entraînement du réseau de neurones.

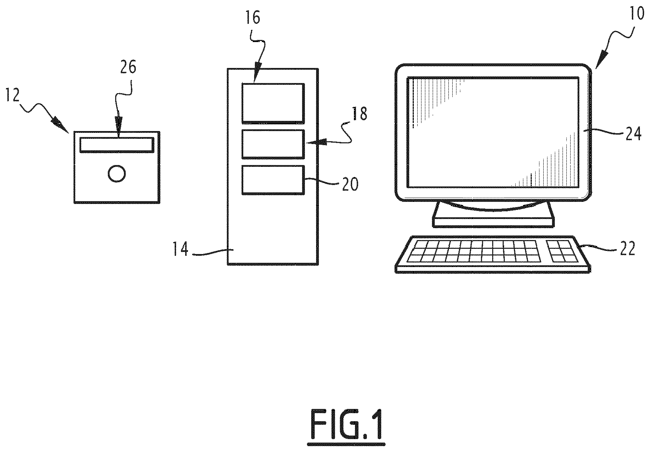

La figure 1 illustre un calculateur 10 et un produit programme d'ordinateur 12, utilisés pour la mise en œuvre d'un procédé d'optimisation du fonctionnement d'un calculateur implémentant un réseau de neurones. Il est par contre à noter que le calculateur sur lequel est implémenté le réseau de neurones est a priori différent du calculateur 10. Les paragraphes qui suivent visent à décrire le calculateur 10, le calculateur implémentant le réseau de neurones étant quant à lui décrit ultérieurement en lien avec le procédé d'optimisation.

Dans une variante, le calculateur sur lequel est implémenté le réseau de neurones est confondu avec le calculateur 10.

Le calculateur 10, est de préférence, un ordinateur.

Plus généralement, le calculateur 10 est un calculateur électronique propre à manipuler et/ou transformer des données représentées comme des quantités électroniques ou physiques dans des registres de calculateur 10 et/ou des mémoires en d'autres données similaires correspondant à des données physiques dans des mémoires, des registres ou d'autres types de dispositifs d'affichage, de transmission ou de mémorisation.

Le calculateur 10 est en interaction avec le produit programme d'ordinateur 12.

Comme illustré par la figure 1, le calculateur 10 comporte un processeur 14 comprenant une unité de traitement de données 16, des mémoires 18 et un lecteur 20 de support d'informations. Dans l'exemple illustré par la figure 1, le calculateur 10 comprend un clavier 22 et une unité d'affichage 24.

Le produit programme d'ordinateur 12 comporte un support d'informations 26.

Le support d'information 26 est un support lisible par le calculateur 10, usuellement par l'unité de traitement de données 16. Le support lisible d'informations 26 est un médium adapté à mémoriser des instructions électroniques et capable d'être couplé à un bus d'un système informatique.

A titre d'exemple, le support d'informations 26 est une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations 26 est mémorisé le programme d'ordinateur 12 comprenant des instructions de programme.

Le programme d'ordinateur 12 est chargeable sur l'unité de traitement de données 16 et est adapté pour entraîner la mise en œuvre d'un procédé d'optimisation du fonctionnement d'un calculateur implémentant un réseau de neurones, lorsque le programme d'ordinateur 12 est mis en œuvre sur l'unité de traitement 16 du calculateur 10.

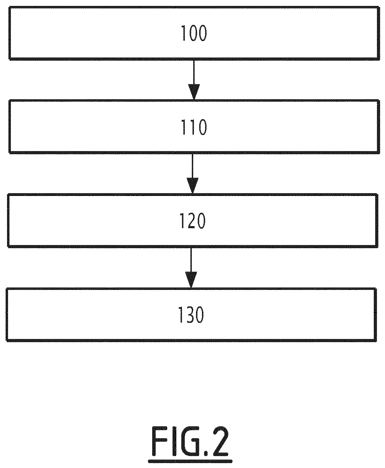

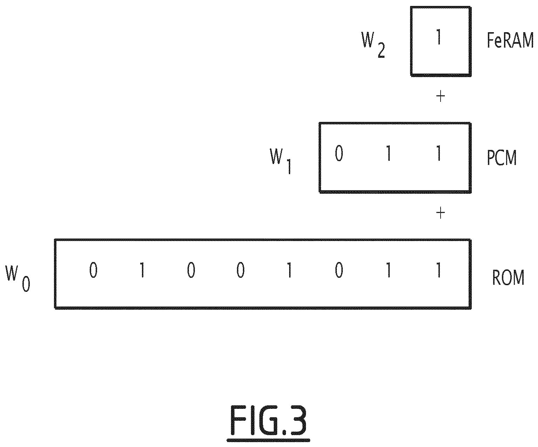

Le fonctionnement du calculateur 10 va maintenant être décrit en référence à la figure 2, qui illustre schématiquement un exemple de mise en oeuvre d'un procédé d'optimisation du fonctionnement d'un calculateur implémentant un réseau de neurones, et des figures 3 à 11 qui illustrent différents exemples de mise en œuvre des étapes d'un tel procédé.

Le procédé d'optimisation est mis en œuvre par le calculateur 10 en interaction avec le produit programme d'ordinateur, c'est-à-dire est mis en œuvre par ordinateur.

Le procédé d'optimisation comprend une étape 100 de fourniture d'un réseau de neurones. Le réseau de neurones présente des paramètres dont les valeurs w sont modifiables lors d'un entraînement du réseau de neurones comme cela est décrit dans ce qui suit.

Un réseau de neurones est un ensemble de neurones. Le réseau de neurones comporte une succession ordonnée de couches de neurones dont chacune prend ses entrées sur les sorties de la couche précédente. Plus précisément, chaque couche comprend des neurones prenant leurs entrées sur les sorties des neurones de la couche précédente.

Dans un réseau de neurones, la première couche de neurones est appelée couche d'entrée alors que la dernière couche de neurones est appelée couche de sortie. Les couches de neurones intercalées entre la couche d'entrée et la couche de sortie sont des couches de neurones cachées.

Chaque couche est reliée par une pluralité de synapses. Chaque synapse présente un paramètre, aussi appelé poids synaptique. Comme évoqué précédemment, les valeurs w des paramètres des synapses sont modifiables lors d'un entraînement du réseau de neurones.

Chaque neurone est propre à effectuer une somme pondérée des valeur(s) reçue(s) de la part des neurones de la couche précédente, chaque valeur étant alors multipliée par le poids synaptique respectif, puis à appliquer une fonction d'activation, typiquement une fonction non-linéaire, à ladite somme pondérée, et à délivrer aux neurones de la couche suivante la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside, la fonction Unité Linéaire Rectifiée (plus souvent désignée ReLU pour la dénomination anglaise correspondante de « *Rectified Linear Unit* ») sont des exemples de fonctions d'activation.

Le procédé d'optimisation comprend une étape 110 de fourniture de données d'entraînement relatives aux valeurs w prises par les paramètres du réseau de neurones lors d'un entraînement du réseau de neurones sur au moins une base de données test.

De préférence, les données d'entraînement comprennent au moins les valeurs w prises par les paramètres du réseau de neurones à l'issue de l'entraînement du réseau de neurones (c'est-à-dire les valeurs finales obtenues pour les paramètres).

En fonction des applications, les données d'entraînement comprennent aussi les valeurs w prises par les paramètres du réseau de neurones au cours de l'entraînement du réseau de neurones sur la base de données test. Cela permet d'en déduire une fréquence de changement et/ou une amplitude de changement des valeurs w des paramètres du réseau de neurones lors de l'entraînement.

La base de données test comprend, par exemple, des données issues d'une application générique (base de données générique), et d'autres données issues d'applications particulières (bases de données applicatives).

Le procédé d'optimisation comprend une étape 120 de détermination, en fonction des données d'entraînement, d'une implémentation du réseau de neurones sur des blocs matériels d'un calculateur de sorte à optimiser un coût relatif au fonctionnement dudit calculateur implémentant le réseau de neurones. L'implémentation d'un réseau de neurones sur un calculateur désigne l'affectation de blocs matériels du calculateur pour la réalisation d'opérations sur le réseau de neurones.

L'implémentation est déterminée par décomposition des valeurs w des paramètres du réseau de neurones en sous-valeurs w₀, ..., wₚ et par l'attribution, à chaque sous-valeur w₀, ..., wₚ, d'au moins un bloc matériel parmi un ensemble de blocs matériels du calculateur. Typiquement, la décomposition est telle que l'application d'une fonction sur les sous-valeurs w₀, .., wₚ de chaque décomposition permette d'obtenir la valeur w correspondante du paramètre.

De préférence, les valeurs w de chaque paramètre sont chacune propres à être représentées par une suite de bits. Chaque bit d'une suite a un poids différent en fonction de la position du bit dans la suite. Le bit ayant le plus grand poids est dit bit de poids fort. Les sous-valeurs w₀, .., wₚ résultant d'une même décomposition étant chacune représentée par une suite d'un ou plusieurs bits tel que le bit de poids fort est différent pour chaque sous-valeur w₀, ..., wₚ. En d'autre termes, chaque sous-valeur w₀, ..., wₚ contribue différemment à la valeur w correspondante du paramètre.

De préférence, le coût à optimiser utilise au moins une métrique de performance du calculateur. L'optimisation vise alors à optimiser cette métrique, c'est-à-dire à la maximiser ou à la minimiser en fonction de la nature de la métrique. La au moins une métrique de performance est, de préférence, choisie parmi : la latence du calculateur sur lequel est implémenté le réseau de neurones (à minimiser), la consommation énergétique du calculateur sur lequel est implémenté le réseau de neurones (à minimiser), le nombre d'inférences par seconde lors de l'inférence du réseau de neurones implémenté sur le calculateur (à maximiser), la quantité de mémoire utilisée par tout ou partie des sous-valeurs de la décomposition (à minimiser), et la surface après fabrication du circuit intégré (en anglais « chirp ») embarquant le calculateur (à minimiser).

De préférence, l'attribution de chaque bloc matériel à une sous-valeur w₀, ..., wₚ est réalisée en fonction de la position du bloc matériel dans le calculateur et/ou du type du bloc matériel parmi les blocs matériels réalisant une fonction de mémorisation et/ou du type du bloc matériel parmi les blocs matériels réalisant une fonction de calcul, et ce de sorte à optimiser le coût de fonctionnement.

La position du bloc matériel dans le calculateur définit le coût d'accès du bloc matériel. Par exemple, pour deux mémoires identiques, la mémoire la plus éloignée de l'unité de calcul du calculateur à un coût d'accès plus élevé que l'autre mémoire qui est plus proche.

Les blocs matériels réalisant une fonction de mémorisation ont par exemple un type différent en fonction de leur taux de reconfiguration et/ou de leur précision. Par exemple, les mémoires de type ROM ont un taux de reconfiguration plus faible que les mémoires de type SRAM, DRAM, PCM ou OXRAM. Les blocs matériels réalisant la fonction de mémorisation peuvent également être le calculateur lui-même, qui est dans ce cas configuré matériellement pour effectuer une opération entre une valeur d'entrée variable et une constante (qui prend la valeur de l'élément de la décomposition).

Les blocs matériels réalisant une fonction de calcul ont par exemple un type différent en fonction de la nature du calcul effectué, par exemple, calcul matriciel versus calcul événementiel (aussi appelé calcul à « spike »).

Dans un exemple de mise en œuvre, chaque valeur w d'un paramètre résulte de l'addition des sous-valeurs w₀, ..., wₚ de la décomposition correspondante. Dans ce cas, chaque valeur w d'un paramètre résulte de la somme d'une sous-valeur w₀, dite poids de base, et d'autres sous-valeurs w₁, ..., wₚ, dites perturbations. Chaque sous-valeur w₀, ..., wₚ est alors représentée par un nombre de bits égal ou différent des autres sous-valeurs w₀, ..., wₚ. Notamment, le poids de base est typiquement représenté par le plus grand nombre de bits. Une telle décomposition permet une représentation des sous-valeurs w₀, ..., wₚ par un entier, une virgule fixe ou encore une virgule flottante. Dans ce cas, des conversions sont appliquées pour uniformiser les représentations des différentes sous-valeurs w₀, ..., wₚ lors de l'addition.

La décomposition par addition, tout comme les autres types de décomposition décrites par la suite, donne la possibilité d'utiliser des mémoires différentes pour le stockage des sous-valeurs w₀, ..., wₚ d'une même décomposition. Si par exemple, les valeurs w des paramètres sont modifiées souvent par des faibles valeurs représentables sur quelques bits, une mémoire en faible précision avec une haute efficacité d'écriture est d'intérêt pour mémoriser les sous-valeurs w₀, ..., wₚ correspondant à ces variations. Les autres sous-valeurs w₀, ..., wₚ sont typiquement implémentées dans des mémoires ayant une faible consommation lecture et potentiellement moins d'efficacité d'écriture, car ces sous-valeurs w₀, ..., wₚ sont lues souvent, mais modifiées rarement. Les mémoires PCM sont, par exemple, des mémoires avec faible consommation de lecture, mais une consommation élevée/cycles limités sur l'écriture. Les mémoires ROM sont des mémoires à faible consommation de lecture, mais haute consommation écriture qui sont figées lors de la fabrication du chip.

Il est également à noter que des mémoires peuvent avoir des tailles physiques différentes ou des coûts de fabrication différents. Par exemple, on utilise une mémoire pour les poids de base avec un coût d'écriture élevé mais très petit (donc on peut en mettre plus sur la même surface de Silicium) ou très facile/pas coûteux à fabriquer/intégrer dans un processus de production standardisé. Le nombre des niveaux possibles peut aussi être un facteur. Par exemple, les mémoires de type PCM peuvent souvent juste représenter 1 ou 2 bit avec suffisamment de fiabilité.

En variante, le même type de mémoire est utilisé pour toutes les sous-valeurs w₀, ..., wₚ de la décomposition, et les coûts d'accès diffèrent seulement par la complexité d'accès. Par exemple, une petite mémoire proche de l'unité de calcul sera rapide et moins coûteuse d'accès, qu'une grande mémoire plus loin de l'unité de calcul mais sauvegardant un plus grand nombre de bits. Ces différences dans le cout d'accès sont par exemple dues au résistances des câbles de connexion, ou au type d'accès (mémoire directement connectée au calculateur par des câbles versus système d'adressage complexe et bus de données requérant des calculs d'adresses ou introduisant des temps d'attente).

Un avantage spécifique de la décomposition par addition, par rapport à la décomposition par concaténation, est d'utiliser plus facilement différents types de représentations pour les sous-valeurs. On peut par exemple utiliser des valeurs entier/virgule fixe/virgule flottante ou des quantités physiques (courant, charge) qui peuvent ne pas être en format binaire.

La figure 3 illustre un exemple de décomposition par addition d'une valeur w d'un paramètre, représentée sur 8 bits en trois sous-valeurs, à savoir : un poids de base w₀ représenté sur 8 bits, une première perturbation w₁ représentée sur 3 bits et une seconde perturbation w₂ représentée sur 1 bit.

Dans un autre exemple de mise œuvre, chaque valeur w d'un paramètre résulte de la concaténation des sous-valeurs w₀, ..., wₚ de la décomposition correspondante. Dans ce cas, chaque valeur w d'un paramètre résulte de la concaténation d'une sous-valeur w₀, dite poids de base, et d'autres sous-valeurs w₁, ..., wₚ, dites perturbations. Chaque sous-valeur w₀, ..., wₚ correspond alors à des bits de poids forts différents des autres sous-valeurs w₀, ..., wₚ. La concaténation est effectuée en commençant par le poids de base, puis par les perturbations dans l'ordre d'importance des perturbations. Une telle décomposition permet une représentation des sous-valeurs w₀, ..., wₚ par un entier ou une virgule fixe.

Outre les avantages mentionnés précédemment avec la décomposition par addition et qui sont applicables à la décomposition par concaténation, décomposition par concaténation donne la possibilité d'utiliser des unités de calcul différentes pour chaque sous-valeur w₀, ..., wₚ de la décomposition. Par exemple, pour une sous-valeur w₀, ..., wₚ entière en n-bit, un multiplicateur entier en n-bit est utilisé. Le type d'unité de calcul utilisé peut aussi être différent. Par exemple, il est possible d'utiliser une unité de calcul optimisée pour des opérations sur les sous-valeurs ayant la plus grande contribution (notamment le poids de base), et une unité de calcul différente optimisée pour les opérations sur les sous-valeurs de faible contribution, tel que des unités de calcul évènementiel. Les unités de calcul événementiel sont notamment d'intérêt si les sous-valeurs sont rarement modifiées et sont souvent à zéro.

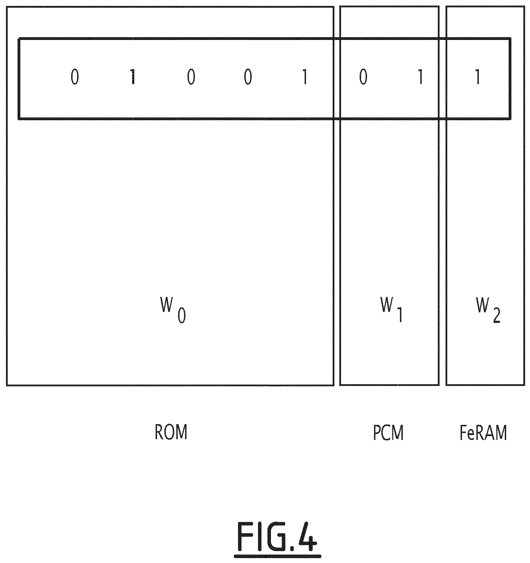

La figure 4 illustre un exemple de décomposition par concaténation d'une valeur w d'un paramètre, représentée sur 8 bits en trois sous-valeurs, à savoir : un poids de base w₀ représenté sur 5 bits, une première perturbation w₁ représentée sur 2 bits et une seconde perturbation w₂ représentée sur 1 bit.

Dans encore un autre exemple de mise en œuvre, chaque valeur w d'un paramètre résulte d'une opération mathématique sur les sous-valeurs w₀, ..., wₚ de la décomposition correspondante. Cette opération est, par exemple, matérialisée par une fonction F ayant pour entrées les sous-valeurs w₀, ..., wₚ de la décomposition et pour sortie la valeur w du paramètre. L'opération mathématique est, par exemple, la multiplication des sous-valeurs w₀, ..., wₚ pour obtenir la valeur w du paramètre. Dans un autre exemple, l'opération mathématique est une addition ou une concaténation selon les modes de mise en œuvre décrits précédemment. Ainsi, cet exemple de mise en œuvre est une généralisation de la décomposition par addition ou concaténation.

Dans un premier exemple d'application, le coût à optimiser utilise au moins une métrique de performance (latence, consommation énergétique) du calculateur implémentant le réseau de neurones, et ce lors d'un entraînement ultérieur du réseau de neurones sur une autre base de données. Cette première application vise, ainsi, à optimiser la performance du calculateur lors d'une phase d'entraînement ultérieur du réseau de neurones. Une telle première application est d'intérêt dans un scénario d'adaptation en temps réel du réseau de neurones au cours duquel les valeurs w des paramètres du réseau de neurones sont modifiées en permanence en fonction des données fournies au système d'apprentissage.

Dans ce premier exemple d'application, les données d'entraînement comprennent à la fois les valeurs w prises par les paramètres du réseau de neurones à l'issue de l'entraînement sur la base de données test (c'est-à-dire les valeurs finales obtenues pour les paramètres), et les autres valeurs w prises par les paramètres du réseau de neurones au cours de l'entraînement du réseau de neurones sur la base de données test. La base de données test comprend typiquement des données similaires ou représentatives de celles que le réseau de neurones va recevoir au cours de son exécution sur le calculateur.

Les valeurs initiales des paramètres du réseau de neurones lors de l'entraînement ultérieur sont définies en fonction des données d'entraînement et correspondent typiquement aux valeurs finales obtenues suite à l'entraînement.

Dans ce premier exemple d'application, la décomposition des valeurs w des paramètres en sous-valeurs w₀, ..., wₚ est alors déterminée en fonction de la fréquence de changement et/ou de l'amplitude de changement desdites valeurs w dans les données d'entraînement. Les blocs matériels attribués à chaque sous-valeur w₀, ..., wₚ sont également choisis de sorte à optimiser le coût de fonctionnement. Typiquement, lorsque des mémoires sont attribuées aux sous-valeurs w₀, ..., wₚ, l'attribution est effectuée en fonction de la contribution de la sous-valeur w₀, ..., wₚ à la valeur correspondante du paramètre. Les mémoires ayant un coût d'accès faible (proche de l'unité de calcul) ou un taux de reconfiguration faible sont typiquement attribuées à des sous-valeurs ayant une grande contribution, car ces sous-valeurs sont plus souvent lues (en entraînement ou inférence) et moins souvent modifiées. Néanmoins, les mémoires ayant un coût d'accès faible ont potentiellement un coût d'écriture élevé, comme cela est le cas pour les mémoires ROM. Ainsi, les mémoires ayant un coût d'écriture faible (mais qui ont donc potentiellement un coût d'accès plus élevé) ou un taux de reconfiguration élevé sont typiquement attribuées à des sous-valeurs ayant une plus faible contribution, car ces sous-valeurs sont plus souvent modifiées que les autres sous-valeurs. Ainsi, dans ce premier exemple, il est accepté d'avoir un coût de lecture plus élevé de sorte à avoir un coût d'écriture faible pour des types des mémoires lorsque les sous-valeurs w₀, ..., wₚ sont souvent modifiées.

Par exemple, dans l'exemple des figures 3 et 4, une mémoire de type ROM (faible coût de lecture, coût d'écriture élevé) est attribuée au poids de base w₀, une mémoire de type PCM (coût de lecture plus élevé, coût d'écriture plus faible) est attribuée à la première perturbation w₁, et une mémoire de type FeRAM (coût de lecture potentiellement encore plus élevé, coût d'écriture encore plus faible) est attribuée à la seconde perturbation w₂.

Dans un deuxième exemple d'application, le coût à optimiser utilise au moins une métrique de performance (latence, consommation énergétique) du calculateur implémentant le réseau de neurones, et ce lors d'une inférence ultérieure du réseau de neurones sur une autre base de données. Cette deuxième application vise, ainsi, à optimiser la performance du calculateur lors d'un processus de transfer learning (de l'anglais traduit en français par « apprentissage par transfert »). Etant donné une base de données générique et une ou plusieurs bases de données applicatives, le but est ici d'obtenir une performance optimisée pour l'ensemble des bases de données applicatives.

Dans ce deuxième exemple d'application, les données d'entraînement comprennent à la fois les valeurs prises par les paramètres du réseau de neurones à l'issue de l'entraînement sur la base de données test (c'est-à-dire les valeurs finales obtenues pour les paramètres), et les autres valeurs prises par les paramètres du réseau de neurones au cours de l'entraînement du réseau de neurones sur la base de données test. La base de données test comprend typiquement des données génériques et applicatives en vue d'évaluer l'impact des données applicatives sur la modification des valeurs w des paramètres du réseau de neurones. Les valeurs initiales des paramètres du réseau de neurones lors de l'entraînement ultérieur sont définies en fonction des données d'entraînement et correspondent typiquement aux valeurs finales obtenues suite à l'entraînement sur les données génériques de la base de données test.

Dans ce deuxième exemple d'application, la décomposition des valeurs w des paramètres en sous-valeurs w₀, ..., wₚ est alors déterminée en fonction de la fréquence de changement desdites valeurs w et/ou de l'amplitude de changement desdites valeurs w dans les données d'entraînement, notamment lors de l'utilisation des données applicatives (transfert learning). Les blocs matériels attribués à chaque sous-valeur w₀, ..., wₚ sont également choisis de sorte à optimiser le coût de fonctionnement.

Par exemple, une partie des sous-valeurs de la décomposition est figée (claquée en dur dans le calculateur). Dans ce cas, la décomposition est choisie de sorte qu'un nombre suffisamment grand de cas applicatifs puisse être traité avec les mêmes sous-valeurs figées. Figer une partie des sous-valeurs permet d'améliorer la latence et/ou la consommation énergétique du calculateur. L'optimisation consiste à trouver une balance entre optimisation des performances et adaptabilité à l'ensemble des bases de données applicatives. En effet, si l'on fixe une trop grande partie des sous-valeurs, il ne sera pas possible de suffisamment modifier les sous-valeurs de la décomposition pour adapter le réseau de neurones à un nombre suffisamment grand de cas applicatifs.

Typiquement, tout comme pour le premier exemple d'application, lorsque des mémoires sont attribuées aux sous-valeurs, l'attribution est, par exemple, effectuée en fonction de la contribution de la sous-valeur à la valeur w correspondante du paramètre. Les mémoires ayant un coût d'accès faible (proche de l'unité de calcul) ou un taux de reconfiguration faible sont typiquement attribuées à des sous-valeurs ayant une grande contribution, car ces sous-valeurs sont moins souvent utilisées (en entraînement ou inférence) et moins souvent modifiées. Néanmoins, les mémoires ayant un coût d'accès faible ont potentiellement un coût d'écriture élevé, comme cela est le cas pour les mémoires ROM. Ainsi, les mémoires ayant un coût d'écriture faible (mais qui ont donc potentiellement un coût d'accès plus élevé) ou un taux de reconfiguration élevé sont typiquement attribuées à des sous-valeurs ayant une plus faible contribution, car ces sous-valeurs sont plus souvent modifiées que les autres sous-valeurs.

Plus spécifiquement, dans ce deuxième exemple d'application, l'attribution se fait par exemple en déterminant les sous-valeurs à figer. Toutefois, il n'est généralement pas utile de modifier le poids après l'entrainement sur la base applicative, donc l'efficacité d'écriture est moins important que pour le premier exemple d'application.

Il est par ailleurs souligné que les différents cas applicatifs peuvent aussi être combinés dans le même système. On pourrait par exemple faire l'apprentissage continu du premier exemple applicatif sur un système avec des sous-valeurs figées du scénario 'transfer learning'. Dans ce cas on va chercher en même temps suffisamment de reconfigurabilité et en même temps une efficacité dans cette reconfiguration. Dans un troisième exemple d'application, le coût à optimiser utilise au moins une métrique de performance du calculateur implémentant le réseau de neurones lors d'une inférence du réseau de neurones en considérant seulement une partie des sous-valeurs de chaque décomposition. Les valeurs w des paramètres du réseau de neurones ont dans ce cas été fixées en fonction des données d'entraînement.

Cette troisième application vise, ainsi, à réaliser une inférence en précision réglable. La décomposition des valeurs w des paramètres en sous-valeurs w₀, ..., wₚ est notamment déterminée en fonction de la contribution desdites sous-valeurs w₀, ..., wₚ à la valeur w correspondante du paramètre. Typiquement, l'idée est d'utiliser lors de la phase d'inférence, seulement les sous-valeurs ayant la plus grande contribution à la valeur w correspondante du paramètre, voire seulement la sous-valeur représentée par le bit de poids le plus fort. De telles sous-valeurs se voient alors attribuer des mémoires à faible coût d'accès ou avec des caractéristiques favorisant la lecture. Les calculs d'inférence sont alors effectués seulement sur ces sous-valeurs. Cela permet d'effectuer une inférence approximative à performance optimisée (faible consommation/latence).

Si de meilleures précisions de calcul sont requises, et qu'une consommation/latence plus élevée est acceptée, d'autres sous-valeurs de la décomposition sont prises en compte dans les calculs. Cela est, par exemple, le cas dans un procédé de reconnaissance d'éléments sur une image (traitement grossier, puis traitement fin). De telles sous-valeurs sont typiquement affectées à des mémoires avec un coût d'accès plus élevé et/ou des caractéristiques de lecture moins optimisées que les sous-valeurs de poids fort. De telles affectations peuvent néanmoins présenter d'autres avantages, par exemple avoir un coût d'écriture plus faible si le troisième exemple applicatif est combiné avec un des autres cas d'utilisation qui requiert une réécriture régulière (notamment premier exemple applicatif).

Dans ce troisième exemple d'application, les données d'entraînement comprennent les valeurs w prises par les paramètres du réseau de neurones à l'issue de l'entraînement sur la base de données test (c'est-à-dire les valeurs finales obtenues pour les paramètres). Les valeurs w des paramètres du réseau de neurones correspondent dans ce cas aux valeurs finales.

A l'issue de l'étape de détermination 120, il est obtenu un calculateur ayant des blocs matériels (mémoire, unité de calcul) attribués aux sous-valeurs w₀, ..., wₚ des décompositions de sorte à optimiser une métrique de performance (latence, consommation énergétique) du calculateur. Pour cela, le cas échéant, le calculateur est préalablement configuré, voir fabriqué sur la base des blocs matériels attribués aux sous-valeurs w₀, ..., wₚ des décompositions.

Le procédé d'optimisation comprend une étape 130 de fonctionnement du calculateur avec l'implémentation déterminée pour le réseau de neurones.

Le fonctionnement correspond à une phase d'entraînement ou d'inférence du réseau de neurones. En fonctionnement, des calculs sont effectués sur les sous-valeurs w₀, ..., wₚ de chaque décomposition en fonction de données reçues en entrée par le réseau de neurones.

Dans un exemple de mise en œuvre, lors de l'étape de fonctionnement, les sous-valeurs w₀, ..., wₚ de chaque décomposition sont chacune multipliées à une valeur d'entrée et les résultats des multiplications résultantes sont sommées (décomposition par addition) ou accumulées (décomposition par concaténation) pour obtenir une valeur finale. Chaque valeur finale obtenue est ensuite utilisée pour obtenir la ou les sorties du réseau de neurones.

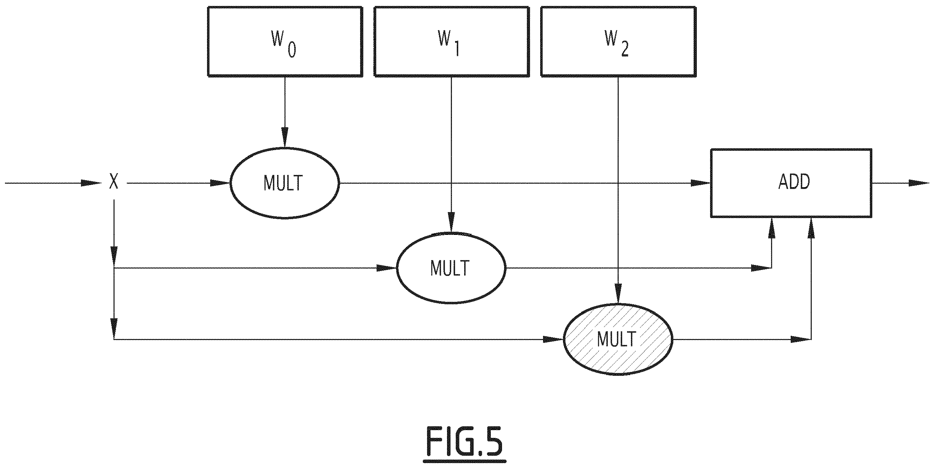

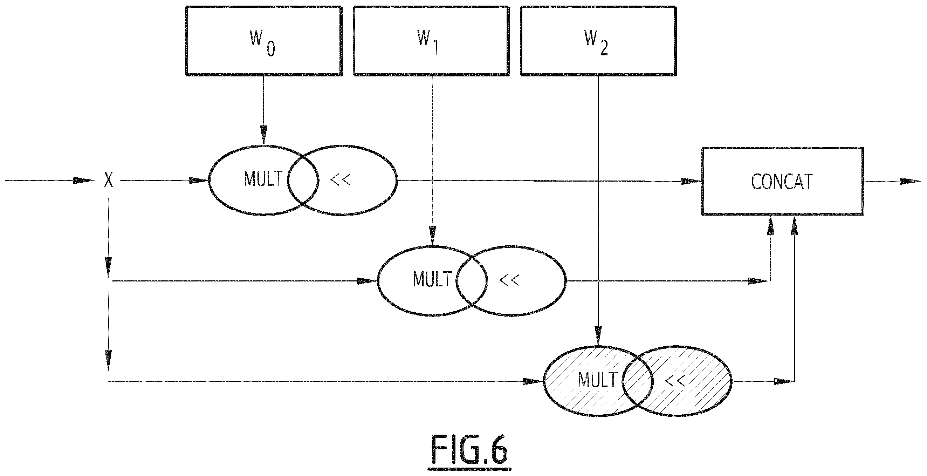

La figure 5 illustre un exemple de multiplication de chaque sous-valeur w₀, w₁ et w₂ par une valeur d'entrée X, suivi d'une addition des multiplications résultantes. La figure 6 illustre un exemple de multiplication de chaque sous-valeur w₀, w₁ et w₂ par une valeur d'entrée X, suivi d'une concaténation des multiplications résultantes, les multiplications résultantes ayant été préalablement converties (décalées ou « shift » en anglais) en fonction des bits correspondant aux sous-valeurs.

Dans un autre exemple de mise en œuvre, lors de l'étape de fonctionnement, les sous-valeurs w₀, ..., wₚ de chaque décomposition sont sommées (décomposition par addition) ou concaténées (décomposition par concaténation) et la somme ou concaténation résultante est multipliée à une valeur d'entrée pour obtenir une valeur finale. Chaque valeur finale obtenue est ensuite utilisée pour obtenir la ou les sorties du réseau de neurones.

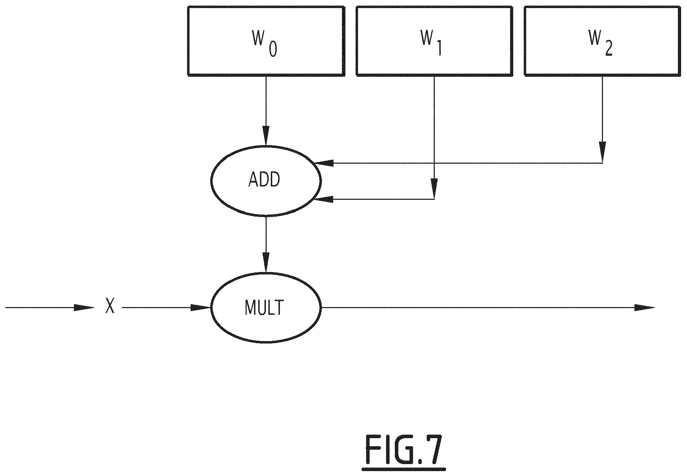

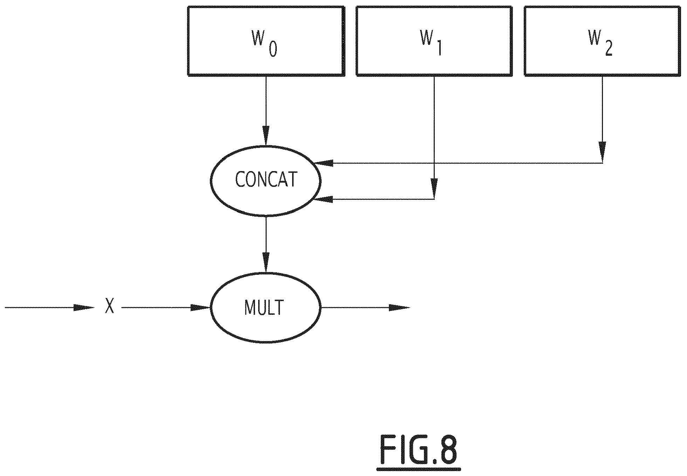

La figure 7 illustre un exemple d'addition de chaque sous-valeur _{W}o, w₁ et w₂ et de multiplication de la somme résultante à une valeur d'entrée X. La figure 8 illustre un exemple de concaténation des sous-valeurs w₀, w₁ et w₂ et de multiplication de la concaténation résultante à une valeur d'entrée X.

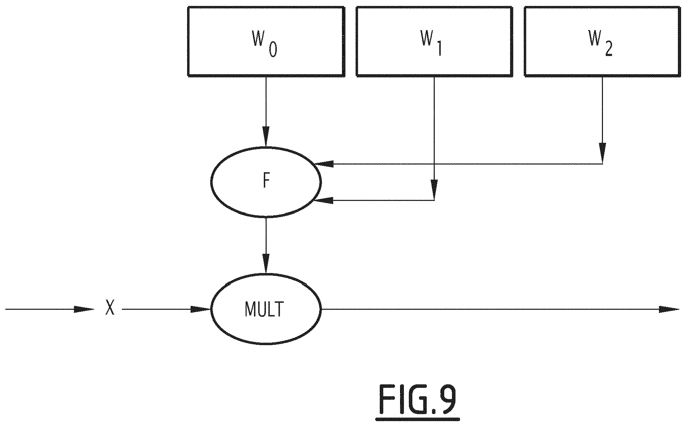

Plus généralement, comme cela est illustré par la figure 9, lors de l'étape de fonctionnement, les sous-valeurs w₀, ..., wₚ de chaque décomposition sont prises comme entrée d'une fonction F dont la sortie est une valeur intermédiaire correspondant à la valeur w du paramètre issu de la décomposition (décomposition résultant d'une opération mathématique). La valeur intermédiaire est alors multipliée à une valeur d'entrée pour obtenir une valeur finale. Chaque valeur finale obtenue est ensuite utilisée pour obtenir la ou les sorties du réseau de neurones.

Lorsque le fonctionnement comprend un entraînement du réseau de neurones, les sous-valeurs w₀, ..., wₚ de chaque décomposition sont mises à jour au cours de l'entraînement.

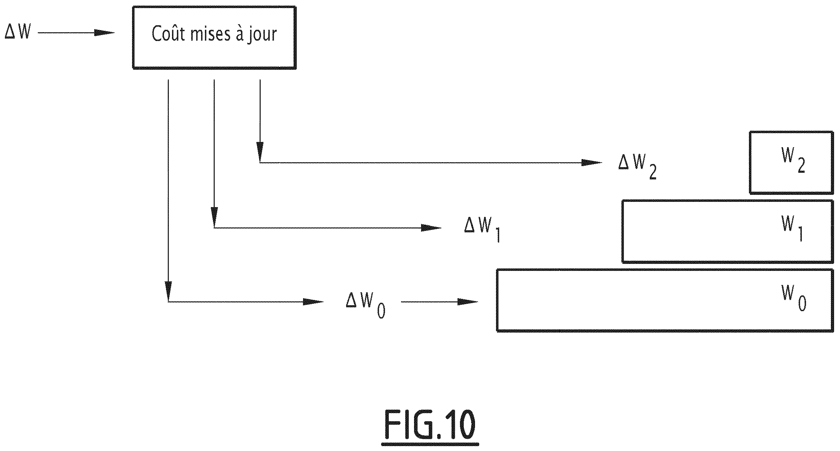

Dans le cas d'une décomposition additive, il est déterminé une décomposition de la variation Δw de la valeur w du paramètre de sorte à optimiser le coût de mise à jour des sous-valeurs w₀, ..., wₚ correspondantes des paramètres. Une telle décomposition pour mise à jour est illustrée par la figure 10. Pour cela, la mise à jour est, par exemple, réalisée selon le coût d'accès des différentes mémoires sur lesquelles sont mémorisées les sous-valeurs w₀, ..., wₚ. Par exemple, en fonction des cas, il est préférable de mettre à jour une grande mémoire avec un coût d'accès élevé, pour éviter de mettre à jour deux mémoires, chacune avec un coût d'accès plus faible, mais une somme de coût d'accès plus élevée. Dans le cas général, le coût à optimiser pour la mise à jour est la somme de tous les coûts d'accès des mémoires qui sont modifiées. De préférence, pour éviter une optimisation complexe de la procédure d'accès, des heuristiques sont utilisés. Dans la plupart des cas, il sera néanmoins plus logique de modifier les sous-valeurs selon leur coût d'accès car en pratique les modifications des valeurs w des paramètres seront relativement faibles, et n'affecteront que les perturbations d'ordre inférieur.

La mise à jour présentée pour la décomposition additive s'applique aussi au cas générique de la décomposition résultant d'une opération mathématique décrite précédemment.

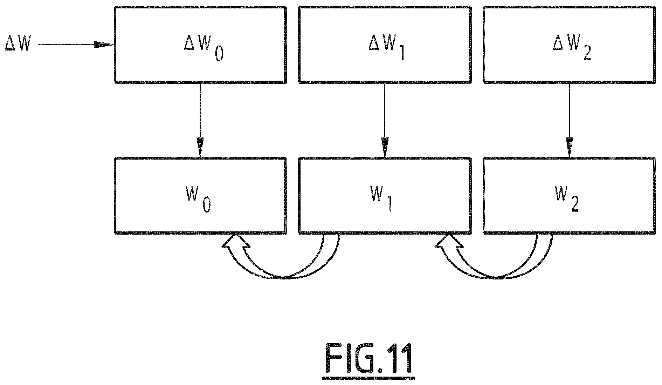

Dans le cas d'une décomposition par concaténation, la valeur de la variation Δw du paramètre est, par exemple, simplement ajoutée bit par bit en commençant par les bits de poids faible. Un mécanisme de communication entre les mémoires sur lesquelles sont mémorisées les sous-valeurs w₀, ..., wₚ permet de communiquer le report de bits en bits. Une telle mise à jour est illustrée par la figure 11.

Ainsi, le présent procédé permet d'obtenir un système d'apprentissage automatique pour lequel les paramètres entraînables sont découpés en plusieurs sous-valeurs, ces sous-valeurs w₀, ..., wₚ étant ensuite traitées par des blocs matériels (mémoires, unités de calcul) choisis de sorte à optimiser les performances du calculateur. Un tel procédé permet donc d'optimiser la performance de systèmes d'apprentissage automatique mettant en œuvre un réseau de neurones.

Notamment, pour des applications d'adaptation en temps réel du réseau de neurones (première application) et de transfer learning (deuxième application), le présent procédé permet d'exploiter le fait que les valeurs w des paramètres du réseau sont seulement légèrement modifiées par de petites perturbations. Ces petites perturbations sont typiquement beaucoup plus faibles en termes de dynamique que la valeur initiale du paramètre, ont des caractéristiques statistiques différentes, et des fréquences de modification potentiellement plus élevées que les poids de base.

Un tel procédé présente aussi un intérêt pour des applications de type inférence approximative (troisième application) permettant ainsi d'optimiser la performance du calculateur lorsqu'une précision approximative dans les données de sortie est acceptable.

En particulier, le présent procédé permet l'exécution d'opérations de type MAC d'une manière optimisée par une décomposition des valeurs w de chaque paramètre en plusieurs sous-valeurs w₀, ..., wₚ, et en effectuant une opération MAC optimisée sur chacune de ces sous-valeurs. Pour cela, une unité de calcul ou de mémorisation optimisée est, par exemple, choisie pour chaque sous-valeur w₀, ..., wₚ de la décomposition.

L'homme du métier comprendra que les modes de réalisation et variantes précédemment décrits peuvent être combinés pour former de nouveaux modes de réalisation pourvu qu'ils soient compatibles techniquement.

## Revendications

1. Procédé d'optimisation du fonctionnement d'un calculateur implémentant un réseau de neurones, le procédé étant mis en œuvre par ordinateur et comprenant les étapes suivantes :
a. la fourniture d'un réseau de neurones, le réseau de neurones présentant des paramètres dont les valeurs (w) sont modifiables lors d'un entraînement du réseau de neurones,
b. la fourniture de données d'entraînement relatives aux valeurs (w) prises par les paramètres du réseau de neurones lors d'un entraînement du réseau de neurones sur au moins une base de données test,
c. la détermination, en fonction des données d'entraînement, d'une implémentation du réseau de neurones sur des blocs matériels d'un calculateur de sorte à optimiser un coût relatif au fonctionnement dudit calculateur implémentant le réseau de neurones, l'implémentation étant déterminée par décomposition des valeurs (w) des paramètres du réseau de neurones en sous-valeurs (w₀, ..., wₚ) et par l'attribution, à chaque sous-valeur (w₀, ..., wₚ), d'au moins un bloc matériel parmi un ensemble de blocs matériels du calculateur, et
d. le fonctionnement du calculateur avec l'implémentation déterminée pour le réseau de neurones.

2. Procédé selon la revendication 1, dans lequel les valeurs (w) de chaque paramètre sont chacune propres à être représentées par une suite de bits, chaque bit d'une suite ayant un poids différent en fonction de la position du bit dans la suite, le bit ayant le plus grand poids étant dit bit de poids fort, les sous-valeurs (w₀, ..., wₚ) résultant d'une même décomposition étant chacune représentée par une suite d'un ou plusieurs bits.

3. Procédé selon la revendication 2, dans lequel chaque valeur (w) d'un paramètre résulte d'une opération mathématique, telle qu'une addition, une concaténation ou une multiplication, sur les sous-valeurs (w₀, ..., wₚ) de la décomposition correspondante.

4. Procédé selon l'une quelconque des revendications 1 à 3, dans lequel, lors de l'étape de fonctionnement, les sous-valeurs (w₀, ..., wₚ) de chaque décomposition sont chacune multipliées à une valeur d'entrée et les résultats des multiplications résultantes sont sommées ou accumulées pour obtenir une valeur finale, la ou les sorties du réseau de neurones étant obtenues en fonction des valeurs finales.

5. Procédé selon l'une quelconque des revendications 1 à 3, dans lequel, lors de l'étape de fonctionnement, une opération mathématique est appliquée sur les sous-valeurs (w₀, ..., wₚ) de chaque décomposition de sorte à obtenir une valeur intermédiaire, la valeur intermédiaire étant la valeur (w) du paramètre correspondant à la décomposition, la valeur intermédiaire étant ensuite multipliée à une valeur d'entrée pour obtenir une valeur finale, la ou les sorties du réseau de neurones étant obtenues en fonction des valeurs finales.

6. Procédé selon la revendication 5, dans lequel l'opération mathématique est une addition, une concaténation ou une multiplication des sous-valeurs (w₀, ..., wₚ) de chaque décomposition pour obtenir la valeur (w) du paramètre correspondant.

7. Procédé selon l'une quelconque des revendications 1 à 6, dans lequel le coût à optimiser utilise au moins une métrique de performance du calculateur implémentant le réseau de neurones lors d'un entraînement ultérieur du réseau de neurones sur une autre base de données, les valeurs initiales des paramètres du réseau de neurones lors de l'entraînement ultérieur étant définies en fonction des données d'entraînement.

8. Procédé selon l'une quelconque des revendications 1 à 6, dans lequel le coût à optimiser utilise au moins une métrique de performance du calculateur implémentant le réseau de neurones lors d'une inférence ultérieure du réseau de neurones après un entraînement ultérieur du réseau de neurones sur une autre base de données, les valeurs initiales des paramètres du réseau de neurones lors de l'entraînement ultérieur étant définies en fonction des données d'entraînement.

9. Procédé selon l'une quelconque des revendications 1 à 8, dans lequel les données d'entraînement comprennent les différentes valeurs prises par les paramètres au cours de l'entraînement sur la au moins une base de données test, la décomposition des valeurs (w) des paramètres en sous-valeurs (w₀, ..., wₚ) étant déterminée en fonction de la fréquence de changement et/ou de l'amplitude de changement desdites valeurs (w) dans les données d'entraînement.

10. Procédé selon l'une quelconque des revendications 1 à 6, dans lequel le coût à optimiser utilise au moins une métrique de performance du calculateur implémentant le réseau de neurones lors d'une inférence du réseau de neurones en considérant seulement une partie des sous-valeurs (w₀, ..., wₚ) de chaque décomposition, les valeurs (w) des paramètres du réseau de neurones ayant été fixés en fonction des données d'entraînement.

11. Procédé selon l'une quelconque des revendications 1 à 10, dans lequel le coût à optimiser utilise au moins une métrique de performance du calculateur, la au moins une métrique de performance étant choisie parmi : la latence du calculateur sur lequel est implémenté le réseau de neurones, la consommation énergétique du calculateur sur lequel est implémenté le réseau de neurones, le nombre d'inférences par seconde lors de l'inférence du réseau de neurones implémenté sur le calculateur, la quantité de mémoire utilisée par tout ou partie des sous-valeurs de la décomposition, et la surface après fabrication du circuit intégré embarquant le calculateur.

12. Procédé selon l'une quelconque des revendications 1 à 11, dans lequel l'attribution de chaque bloc matériel à une sous-valeur (w₀, ..., wₚ) est réalisée en fonction de la position du bloc matériel dans le calculateur et/ou du type du bloc matériel parmi les blocs matériels réalisant une fonction de mémorisation et/ou du type du bloc matériel parmi les blocs matériels réalisant une fonction de calcul.

13. Produit programme d'ordinateur sur lequel est mémorisé un programme d'ordinateur comprenant des instructions de programme, le programme d'ordinateur étant chargé sur une unité de traitement de données et entraînant la mise en oeuvre d'un procédé selon l'une quelconque des revendications 1 à 12 lorsque le programme d'ordinateur est mis en œuvre sur l'unité de traitement des données.

14. Support lisible d'informations sur lequel est mémorisé un produit programme d'ordinateur comprenant des instructions de programme, le programme d'ordinateur étant chargé sur une unité de traitement de données et entraînant la mise en oeuvre d'un procédé selon l'une quelconque des revendications 1 à 12 lorsque le programme d'ordinateur est mis en oeuvre sur l'unité de traitement des données.
